(19)

Europäisches Patentamt

European Patent Office

Office européen des brevets

(11) **EP 1 750 188 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(51) Int Cl.:
*G05B 19/048* (2006.01)  *G05B 9/03* (2006.01)

(21) Anmeldenummer: **06016407.6**

(22) Anmeldetag: **07.08.2006**

(54) **Verfahren und Schaltungsanordnung zur sicheren Zustandsüberwachung einer Antriebseinheit mit Mehrphasenmotor**

Method and circuit configuration for securely monitoring the condition of a drive unit with multi-phase motor

Procédé et dispositif de couplage destinés à la surveillance d'état sécurisée d'une unité d'entraînement munie d'un moteur polyphasé

(84) Benannte Vertragsstaaten:
**DE FR IT SE**

(30) Priorität: **06.08.2005 DE 102005037189**

(43) Veröffentlichungstag der Anmeldung:
**07.02.2007 Patentblatt 2007/06**

(73) Patentinhaber: **Reis GmbH & Co. KG Maschinenfabrik**
**63785 Obernburg (DE)**

(72) Erfinder:
• **Som, Franz**
**64750 Lützelbach (DE)**

• **Berberich, Georg**
**63927 Bürgstadt (DE)**
• **Laumeister, Peter**
**63939 Wörth (DE)**

(74) Vertreter: **Stoffregen, Hans-Herbert**
**Patentanwalt**
**Postfach 21 44**
**63411 Hanau (DE)**

(56) Entgegenhaltungen:
EP-A1- 1 239 354    WO-A-99/60451
DE-A1- 3 228 954    DE-A1- 10 163 010
DE-C1- 19 950 764    US-A- 5 206 572

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zur sicheren Zustandsüberwachung einer Antriebseinheit mit Mehrphasenmotor, Nach dem Oberbegriff des Anspruchs 1 sowie auf eine Schaltungsanordnung nach dem Oberbegriff des Anspruchs 7.

Ein Verfahren und eine Schaltungsanordnung der eingangs genannten Art ist beispielsweise in der DE-A-101 63 010 beschrieben. Dabei handelt es sich um ein Verfahren und eine Vorrichtung zur sicheren Geschwindigkeitsüberwachung einer Antriebseinheit. Hierbei werden Strom-Istwerte von zwei Motorphasen gemessen und jeweils separaten Auswerteeinheiten in Form von Prozessoren zugeführt. Diese führen auf unterschiedliche Weise die Überwachung einer Geschwindigkeitsgrenze durch, wobei Ergebnisse der Geschwindigkeitsüberwachung kreuzweise verglichen werden.

Ein erster Prozessor arbeitet einen regulären Regelungsalgorithmus der Regelung ab und führt anhand eines geschätzten oder auch gemessenen Drehzahlwertes die gewünschte Überwachung auf Überschreitung der Drehzahlgrenze durch. Der zweite Prozessor ermittelt entweder aus den Strom-Istwerten oder aus einer Rekonstruktion der Spannung aus den Ansteuersignalen der Transistoren die aktuelle Ausgangsfrequenz des Umrichters und führt in analoger Weise zum ersten Prozessor eine Grenzwertüberwachung und entsprechende Folgeaktion bei dessen Überschreitung durch. Ein sicherer Strom-Istwert des Mehrphasenmotors wird jedoch nicht zur Verfügung gestellt.

In der EP-B-1 239 354 wird ein Verfahren zur Überwachung einer Bremseinrichtung beschrieben. Dabei wird ein einem Haltemoment entsprechender Haltestrom der Antriebseinheit bei geöffneter Bremseinrichtung gemessen und gespeichert. Anschließend wird die Antriebseinheit bei geschlossener Bremseinrichtung mit einem achsspezifischen Stromwert beaufschlagt, der die Bremseinrichtung mit einem Moment belastet, das gleich oder kleiner als der Nennstrom der Bremseinrichtung ist. Während des Tests wird der Antrieb gleichzeitig auf Stillstand überwacht. Auch bei diesem Verfahren ist eine sichere Strom-Istwerterfassung nicht vorgesehen.

Die US-A-5 206 572 bezieht sich auf eine microcomputergesteuerte Einrichtung zur Durchführung von Funktionen eines Motorstarts und eines Überlastschutzes. Dazu werden die Strom-Istwerte von drei Motorphasen erfasst. Die Motorströme werden mittels Stromwandler erfasst, die an Ausgangsspannung gleichgerichtet und einem A-D-Wandler eines Microcomputers zugeführt werden. Allerdings werden die Istwerte in ein und demselben Microprozessor bzw. Microcomputer ausgewertet unter Bereitstellung einer einzigen Microprozessorsoftware. Dies hat zur Folge, dass bei Hardware-Fehlern bzw. Software-Fehlern die Möglichkeit einer fehlerhaften Auswertung aller Strom-istwerte gegeben ist, mit der Folge, dass eine Sicherheitsauslegung der Gesamtanlage beispielsweise nach der Sicherheitskategorie IV DIN EN 954-1 bzw. EN 594-1/ISO EN 13849-1 nicht gewährleistet ist.

Davon ausgehend liegt der vorliegenden Erfindung das Problem zu Grunde, ein Verfahren und eine Schaltungsanordnung der eingangs genannten Art dahingehend weiterzubilden, dass von dem Motorstrom abhängige Zustände einer Antriebseinheit überwacht werden können. Dazu zählen statische und dynamische Belastungen sowie durch die Antriebseinheit hervorgerufene Kräfte.

Das Problem wird erfindungsgemäß durch ein Verfahren mit den Merkmalen des Anspruchs 1 gelöst.

Durch das erfindungsgemäße Verfahren ist es erstmalig möglich, nicht nur Maschinenzustände, wie beispielsweise Position, Geschwindigkeit und Beschleunigung zu überwachen, sondern erstmalig Maschinenzustände, die mit dem Motorstrom und damit mit dem Achsmoment im Zusammenhang stehen. Dazu zählen sowohl statische als auch dynamische Belastungen sowie durch die Antriebseinheit hervorgerufene Kräfte.

Die Erfindung bezieht sich außer auf die Erzeugung der sicheren Strom-Istwerte auch auf deren Verwendung und Auswertung in dem sicheren Vergleicher. Dadurch lassen sich sicherheitstechnisch relevante Funktionen wie eine sichere Bremsenprüfung und/oder eine sichere Zustandsüberwachung realisieren.

Gemäß einer bevorzugten Verfahrensweise ist vorgesehen, dass der Strom-Sollwert entweder von einem Servoverstärker oder von einer Maschinensteuerung dem sicheren Vergleicher zugeführt wird.

Je nach Anwendung und zu erreichendem Sicherheitsniveau ist vorgesehen, dass beliebige Kombinationen aus Strom-Sollwert, Effektivstrom-Istwert der ersten Auswerteeinheit sowie Effektivstrom-Istwert der zweiten Auswerteeinheit zu weiteren Berechnungen verwendet werden.

In dem sicheren Vergleicher können die Effektivstrom-Istwerte mehrerer Servoverstärker ausgewertet werden, wobei das Ergebnis des Vergleichs in dem sicheren Vergleicher oder einer sicheren speicherprogrammierbaren Steuerung als Sicherheitsmerker für die Realisierung beliebiger Applikations-Funktionen verwendet werden kann.

Ein weiteres bevorzugtes Verfahren zeichnet sich dadurch aus, dass der sichere Stromwert zur Bremsenprüfung einer Bremseinrichtung der Antriebseinheit verwendet wird.

Hierbei ist vorgesehen, dass nach Öffnen der Bremseinrichtung ein aktueller Haltestrom, der einem Haltemoment des Motors in einer Prüfstellung entspricht, gemessen wird, dass anschließend die Bremseinrichtung geschlossen wird, dass der Motor bei geschlossener Bremse mit einem Prüfstrom beaufschlagt wird und dass der Motor während der Prüfphase auf Stillstand überwacht wird.

Ferner ist vorgesehen, dass die dem Prüf-Drehmoment entsprechenden Prüfströme und ggfs. Sicherheitsfaktoren für jeden zu überwachenden Motor bzw.

jede zu überwachende Achse zwischengespeichert werden.

Das Problem wird erfindungsgemäß durch eine Schaltungsanordnung mit den Merkmalen des Anspruchs 7 gelöst.

Vorzugsweise sind die Stromgeber als Stromwandler wie LEM-Module ausgebildet, welche eine analoge Ausgangsspannung liefern. Die Auswerteeinheit weist einen A/D-Wandler und einen Mikrokontroller auf, wobei der A/D-Wandler eingangsseitig mit jeweils einem der Stromgeber verbunden ist und ausgangsseitig an einem Eingang des Mikrocontrollers angeschlossen ist und wobei ein Ausgang des Mikrocontrollers mit einem Eingang des sicheren Vergleichers verbunden ist.

Des Weiteren zeichnet sich die Schaltungsanordnung dadurch aus, dass die Stromgeber sowie die Auswerteeinheiten Bestandteil eines Servoverstärkers sind.

Der sichere Vergleicher kann als Sicherheits-SPS ausgebildet sein, wobei zusätzlich zu den Eingängen für die Strom-Istwerte der Motorströme ein Eingang für einen Strom-Sollwert sowie ein Ausgang zur Bereitstellung des sicheren Stromwertes vorgesehen ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung zu entnehmenden bevorzugten Ausführungsbeispielen.

Es zeigen;

Fig. 1    ein Blockschaltbild einer Schaltungsanordnung zur sicheren Strom- Istwerterzeugung und

Fig. 2    ein Blockschaltbild eines Verfahrens zur sicheren Bremsenprüfung.

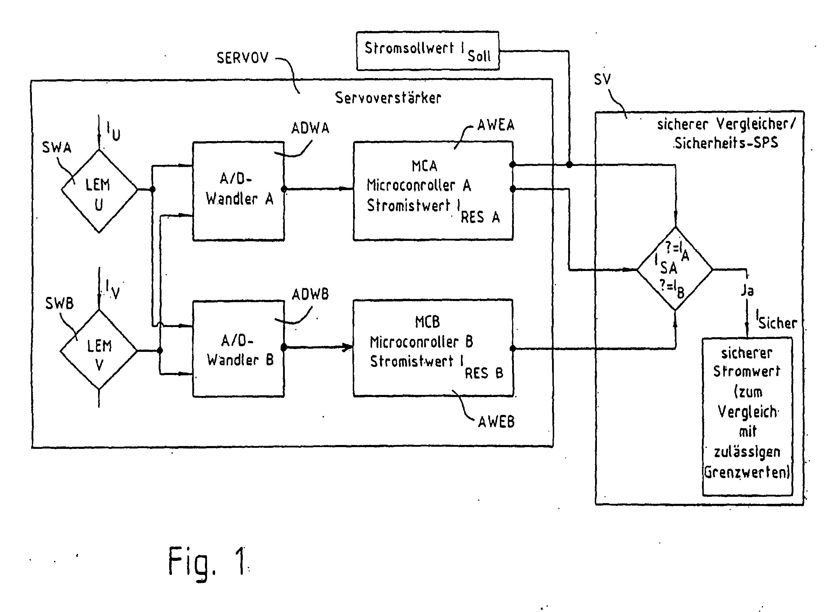

Fig. 1 zeigt ein Blockschaltbild eines Servoverstärkers SERVOV zur Erfassung von Motorströmen $I_U$, $I_V$ eines Dreiphasen-Motors (nicht dargestellt) einer Antriebseinheit und eines sicheren Vergleichers SV zur Bereitstellung eines sicheren Strom-Istwertes $I_{SICHER}$ zum Vergleich mit zulässigen Grenzwerten.

Der Servoverstärker SERVOV umfasst zumindest zwei Stromgeber SWA, SWB in Form von Stromwandlern (LEM-Module). Das Ausgangssignal jeden Stromgebers SWA, SWB wird mittels zwei Auswerteeinheiten AWEA, AWEB zweikanalig ausgewertet. Die Auswerteeinheiten umfassen jeweils einen A/D-Wandler ADWA, ADWB, die jeweils mit einem Ausgang jeweils eines der Stromwandler SWA, SWW verbunden sind. Ausgangsseitig sind die A/D-Wandler ADWA, ADWB mit einem Eingang eines Mikrocontrollers MCA, MCB verbunden. Jeweils ein Ausgang eines der Mikrocontroller MCA, MCB ist mit einem Eingang des sicheren Vergleichers SV verbunden, in dem die in den Mikrocontrollern MCA, MCB berechneten Istwerte miteinander verglichen werden können.

Des Weiteren weist der sichere Vergleicher SV einen Eingang für einen Strom-Sollwert $I_{SOLL}$ auf. Dieser kann entweder von einem der Mikrocontroller MCA, MCB des Servoverstärkers SERVOV oder auch von einer Maschinensteuerung (nicht dargestellt) bereitgestellt werden. Im vorliegenden Fall wird der Servoverstärker SERVOV gebildet aus den Stromwandlern SWA, SWB, den A/D-Wandlern ADWA, ADWB sowie den Mikrocontrollern MCA, MCB, wobei ein Strom-Sollwert $I_{SOLL}$ aus einem der Mikrocontroller MCA, MCB abgegriffen werden kann.

Aus den Motorströmen $I_U$, $I_V$ zweier Motorphasen kann der effektive Motorstrom $I_{EFF\ IST}$ und daraus ein Drehmoment des Motors berechnet werden.

Dazu werden Ausgangssignale der Stromwandler SWA, SWB in den unabhängigen A/D-Wandlern ADWA, ADWB aufgenommen und dann in den zugehörigen Mikrocontrollern MCA, MCB ausgewertet. Die beiden resultierenden Stromwerte $I_{RESA}$, $I_{RESB}$ werden anschließend in dem sicheren Vergleicher SV bzw. einer sicheren speicherprogrammierbaren Steuerung (Sicherheits-SPS) weiterverarbeitet. Dem sicheren Vergleicher SV wird zudem auch der Strom-Sollwert $I_{SOLL}$ zugeführt, entweder von dem Servoverstärker SERVOV oder der Maschinensteuerung (nicht dargestellt). Je nach Anwendung und zu erreichendem Sicherheitsniveau können beliebige Kombinationen der resultierenden Stromwerte $I_{RESA}$, $I_{RESB}$, $I_{SOLL}$ zur weiteren Berechnung verwendet werden.

Als Ausgangssignal ist ein sicherer Stromwert $I_{SICHER}$ vorgesehen, der zum Vergleich beispielsweise mit zulässigen Grenzwerten herangezogen werden kann.

Es ist anzumerken, dass in dem sicheren Vergleicher SV mehrere resultierende Stromwerte $I_{RESN}$ von N-Servoverstärkern SERVOV ausgewertet werden können, wobei die Ergebnisse beispielsweise in der Sicherheits-SPS als Sicherheitsmerker für die Realisierung beliebiger Applikationsfunktionen verwendet werden können.

Nachfolgend soll das Beispiel einer sicheren Bremsenprüfung erläutert werden.

Aus dem Stand der Technik sind Verfahren zur Steuerung und Überwachung einer Bremseinrichtung bekannt, wobei ein einem Haltemoment entsprechender Haltestrom der Antriebseinheit bei geöffneter Bremseinrichtung gemessen und gespeichert wird. Dabei ist vorgesehen, dass die Antriebseinheit bei geschlossener Bremseinrichtung mit einem achsspezifischen Stromwert beaufschlagt wird, die die Bremseinrichtung mit einem Moment belastet, das gleich oder kleiner als das Nennmoment der Bremseinrichtung ist. Gleichzeitig damit wird der Antrieb auf Stillstand überwacht.

Durch Anwendung der erfindungsgemäßen Strom-Istwerterzeugung und der Überwachung des Ablaufs und der relevanten Grenzwerte in dem sicheren Vergleicher SV kann jedoch eine zusätzliche Personensicherheit erreicht werden, da bei fehlerhafter Ansteuerung des Servoverstärkers SERVOV ein unabhängiges Sicherheitsgerät diesen Missstand aufdeckt und nicht fälschlicherweise eine funktionsfähige Bremse diagnostiziert wird.

Für eine sichere Ansteuerung der Haltebremsen muss eine regelmäßige sicher überwachte Bremsenprüfung (z. B. innerhalb von 8 Stunden) realisiert werden. Das Zeitintervall ist abhängig von einer Risikoanalyse und kann als sicherheitsrelevanter Parameter verändert werden. Im Folgenden werden analog zu dem sicheren Zugriff der Bremsenprüfung auch die Zugriffe Bremsenprüfung oder Bremsentest verwendet.

Kurz zusammengefasst funktioniert die Bremsenprüfung folgendermaßen:

- Aktuelle Halteströme, bzw. Haltemomente der Motoren in Prüfstellung messen
- Bremse schließen
- Mit dem Motor gegen die Bremse drücken und dabei überprüfen, ob sich die Motorwelle bewegt.

Dabei kommt es entscheidend darauf an, dass die Bremse mit dem ausreichenden Prüf-Drehmoment $M_{BTF}$ belastet wird. Das Prüf-Drehmoment setzt sich zusammen aus einem Schwerkraftanteil (dem gemessenen Haltemoment) und einem zusätzlichen, vom Antrieb erzeugten Moment.

Das zu wählende Prüf-Drehmoment $M_{BTF}$ berechnet sich:

$$M_{BTF} = M_{max} * f_F$$

mit

$M_{BTF}$: Drehmoment, das von der Bremse gehalten werden muss. Ansonsten wird ein Fehlerzustand erreicht. (Bremsentest Fehler)

$M_{max}$: Drehmoment, mit dem die Haltebremse maximal von der entsprechenden Achse belastet wird, (Nennlast incl. Zuladung)

$f_F$: Sicherheitsfaktor z.B. 1,3

Um Fehler schon frühzeitig zu erkennen und vor Ausfall der Maschine mit einem Austausch der Haltebremse reagieren zu können, sollte die Bremse in jedem Fall zunächst mit einem höheren Drehmoment getestet werden. Dazu ist $M_{BTW}$ geeignet;

$$M_{BTW} = M_{max} * f_W$$

mit

$M_{BTW}$: Drehmoment, das von der Bremse gehalten werden muss. Ansonsten wird eine Warnung ausgegeben und der Test mit $M_{BTF}$ wiederholt.

(Bremsentest Warnung)

$M_{max}$; Drehmoment, mit dem die Haltebremse maximal von der entsprechenden Achse belastet wird.

$f_W$: Sicherheitsfaktor, z.B. 1,5

Der Wert für $M_{max}$ muss für jede zu überwachende Achse mit dem Sicheren Vergleicher bzw. der Sicherheits-SPS bekannt gemacht werden.

Den oben beschriebenen Drehmomenten entspricht immer ein direkt proportionaler Motorstrom. Deshalb kann jedes Moment auch direkt durch Multiplikation mit einem Faktor in einen entsprechenden Strom umgerechnet werden. Damit sind die Begriffe "Strom" und "Drehmoment" prinzipiell austauschbar.

Weiterhin muss die Sicherheits-SPS eine Uhr (Zeitzähler) zur Kontrolle des oben erläuterten Testintervalls (Zeitüberwachung) bereitstellen.

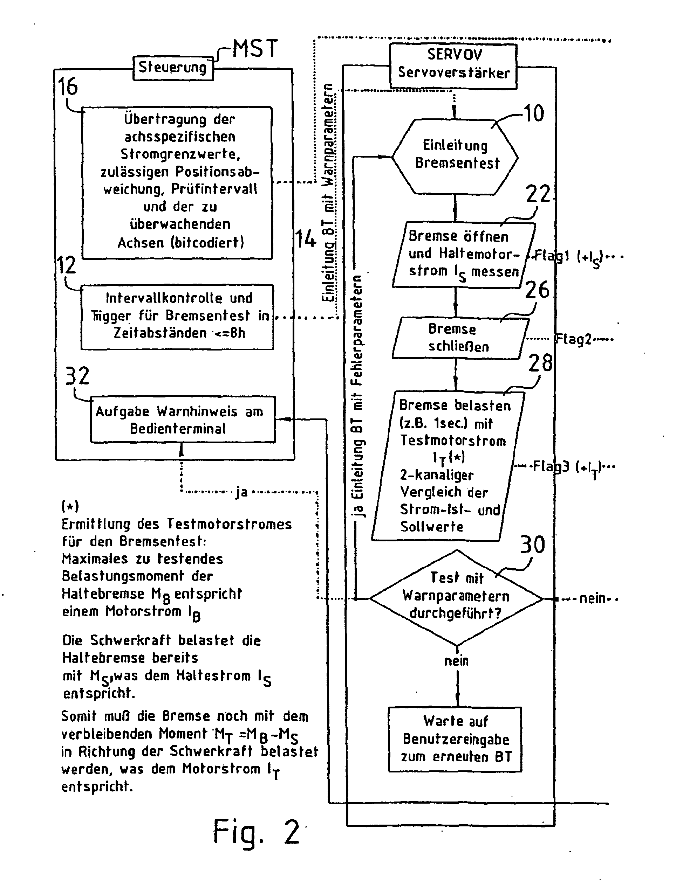

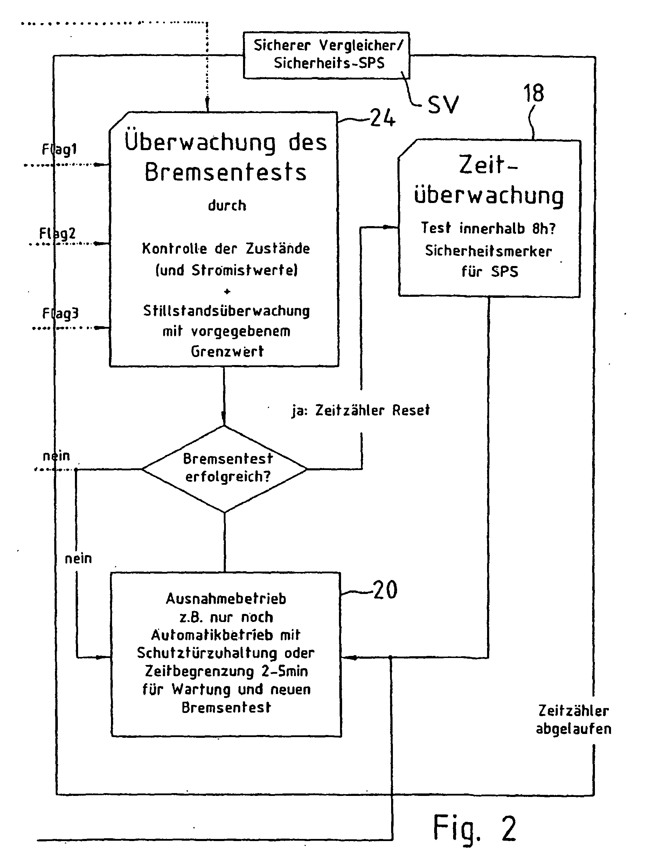

Fig. 2 zeigt den kompletten Ablauf der Bremsenprüfung, der im Folgenden beschrieben wird:

Ein Bremsentest (Modul 10) wird von der Maschinensteuerung MST nach Ablauf eines gewissen Zeitintervalls (Modul 12) oder dem Bedienermodul (Modul 14) initiiert. Dazu müssen alle Parameter, die von dem sicheren Vergleicher SV, der als Sicherheits-SPS ausgebildet ist, überwacht werden sollen, an diese übertragen werden (Modul 16). Dazu gehören zunächst alle Achsnummern, für die eine Bremsenprüfung durchgeführt werden soll. Weiterhin die Strom-/Drehmomentgrenzwerte und zulässige Positionsabweichungen dieser Achsen während des Tests sowie die Zeiten für die Achsbelastung und das maximale Zeit-Intervall der Bremsenprüfung.

Die Sicherheits-SPS überwacht mit Hilfe ihrer Zeitüberwachung (Modul 18) immer, ob das vorgegebene maximale Zeitintervall seit der letzten Bremsenprüfung nicht überschritten wurde. Liegt eine Zeitüberschreitung vor, so wird nur noch ein Ausnahmebetrieb (Modul 20) zugelassen in dem zum Beispiel das Einschalten der Maschine außer zur Bremsenprüfung nicht mehr zugelassen wird.

In der weiteren Beschreibung wird nur noch auf eine Achse eingegangen, auch wenn die Bremsenprüfung für mehrere Achsen gleichzeitig durchgeführt werden kann. Zudem erfolgen alle nachfolgend beschriebenen Messungen und Auswertungen auf zwei unabhängigen Kanälen im Servoverstärker SERVOV.

Nach Beginn der Bremsenprüfung (Modul 10) muss der Servoverstärker SERVOV zunächst die statische Belastung der Bremse durch die Schwerkraft messen. Dazu wird die Bremse geöffnet und das aktuelle Haltemoment $M_S$ durch Messung des benötigten Motorstromes $I_S$ ermittelt (Modul 22). Das Haltemoment sowohl von Kanal A als auch von Kanal B wird an die Sicherheits-SPS übertragen und dort gespeichert (Modul 24). Bei einer weniger leistungsfähigen Sicherheits-SPS kann der entsprechende Wert auch im Servoverstärker gespeichert werden. Die Sicherheits-SPS bekommt dann nur durch Flagl mitgeteilt, dass der Haltestrom ermittelt wurde.

Nun wird die Bremse wieder geschlossen und auch dies der Sicherheits-SPS durch Flag2 mitgeteilt (Modul 26).

Folgende zwei Teststufen sind möglich:

> 1. Die Tauglichkeit der Bremse für die Gewährleistung der Personensicherheit soll getestet werden.
> 2. Die Bremse soll auf ihre Funktion und Zuverlässigkeit, z. B. zur Festlegung von Wartungen, geprüft werden.

In Stufe 1 wird eine Belastung der Bremse mit dem Drehmoment $M_{BTF}$ gewählt. Dieses Drehmoment muss die Bremse in jedem Fall halten können, um einen personensicheren Betrieb zu gewährleisten.

In Stufe 2 wird eine Belastung der Bremse mit dem Drehmoment $M_{BTW}$ gewählt, die Stufe 1 mit einschließt.

Um die entsprechende Belastung ($M_{BTF}$ oder $M_{BTW}$) zu erreichen, errechnet der Servoverstärker die Differenz aus dieser geforderten Belastung ($M_{BTF}$ oder $M_{BTW}$) und der vorher ermittelten statischen Last der Achse. Das resultierende Drehmoment muss durch Einprägen eines entsprechenden Stromes auf die Achse gebracht werden. In beiden Fällen erfolgt die Belastung für einen bestimmten, sicherheitstechnisch relevanten aber einstellbaren Zeitraum (z.B. 1 Sekunde) (Modul 28).

Der gemessene Wert für den Belastungsstrom wird zur Sicherheits-SPS übertragen. Damit kann diese überwachen, ob die notwendige Belastung der Achse auch tatsächlich stattgefunden hat (Modul 24). Dabei ist die Summe aus Belastungsstrom und statischer Belastung maßgeblich. Auch hier ist es in einer einfacheren Variante möglich, nur per Flag3 zu signalisieren, dass der geforderte Strom erreicht wurde. Die entsprechenden Berechnungen müssen dann im jeweiligen Kanal des Servoverstärkers durchgeführt werden.

In jedem Fall überwacht die Sicherheits-SPS während des Belastungstests den Stillstand der Achse (Modul 24). Bewegt sich die Achse während der Belastung oder wurde der notwendige Belastungsstrom nicht erreicht, so ist der Test nicht bestanden. Daraufhin ist wieder nur der Ausnahmebetrieb (Modul 20) möglich.

Wurde der Test mit Belastungsstufe 2 durchgeführt, so kann am Bedienterminal eine Warnung an den Bediener ausgegeben werden (Modul 20) und es folgt ein Test mit Stufe 1, um die Maschine doch noch sicher betreiben zu können. Im Test mit Belastungsstufe 1 muss ein Hinweis erfolgen (Modul 22), dass die Bremse nicht mehr sicher ist und diese zunächst in Stand gesetzt werden, bevor ein weiterer Test sinnvoll ist.

Des Weiteren kann das erfindungsgemäße Verfahren zur Erzeugung eines sicheren Stromwertes $I_{SICHER}$ zur sicheren Zustandsüberwachung einer Antriebseinheit verwendet werden.

Der Motorstrom verhält sich proportional dem aufgebrachten Moment Daher erlaubt der sicher erfasste Motorstrom $I_{ist}$ die sichere Ermittlung und Überwachung des durch den Motor aufgebrachten Momentes $\tau_{ist}$. Damit, und durch die zusätzliche Kenntnis der sicheren Lage-Jstwerte $q_{ist}$, ist die Herleitung weiterer Größen für jede einzelne Maschinenachse möglich.

Nachfolgend werden die Zusammenhänge nur vereinfacht dargestellt. Zum Beispiel bleiben die Reibungsverhältnisse, Masseschwerpunkte, Getriebeuntersetzung usw. bei der Betrachtungsweise unberücksichtigt, da sie zur Erklärung des Prinzips nicht erforderlich sind. Bei der Ausführung des Verfahrens sind diese jedoch zu berücksichtigen. Die dazu erforderlichen Formeln und Algorithmen sind Allgemeingut der Physik und Mathematik.

Das Verfahren gilt sowohl für translatorische als auch für rotatorische Maschinenachsen. Die Verhältnisse werden jeweils nur für eine Maschinenachse beschrieben. Sie gelten jedoch prinzipiell auch für mehrere seriell gekoppelte Maschinenachsen wie dies z. B. bei einem Roboter oder Manipulator der Fall ist.

Gegeben sind:

> (1) $q_{ist}$ : Istwert der Achse / Lage-Istwert (verallgemeinerte Roboterkoordinate, Gelenkwinkels bzw. Schublänge)
> (2) $I_{ist}$: Strom-Istwert
> (3) C: Motorkonstante (aus Motorübertragungskennlinie)
> (4) m : (träge) Masse

dann gilt:

$$(5) \quad \dot{q}_{ist} = \frac{q_{ist}}{dt} \quad \Rightarrow \text{Istwert der Achs-Geschwindigkeit}$$

$$(6) \quad \ddot{q}_{ist} = \frac{\dot{q}_{ist}}{dt} \quad \Rightarrow \text{Istwert der Achs-Beschleunigung}$$

(7) $\tau_{ist} = I_{ist} \cdot C \Rightarrow$ Istwert des Motormomentes / Achs-Moment

näherungsweise gilt:

$$(8) \quad \ddot{q}_{erw} = \frac{\tau_{ist}}{m} \Rightarrow \text{Erwartungswert für die Achs-Beschleunigung}$$

(9) $\dot{q}_{erw} = \int \ddot{q}_{erw} \, dt \Rightarrow$ Erwartungswert für die Achs-Geschwindigkeit
(10) $q_{erw} = \int \dot{q}_{erw} \, dt \Rightarrow$ Erwartungswert für den Lageistwert

$$(11) \quad I_{erw} = (m \cdot \ddot{q}_{erw}) \cdot \frac{1}{C}$$

Durch die Differenziation der sicheren Lage-Istwerte $q_{ist}$ (1) wird ein sicherer Geschwindigkeits-Istwert $\dot{q}_{ist}$ berechnet (5) und daraus durch Differenziation ein

sicherer Beschleunigungs-Istwert $\ddot{q}_{ist}$ berechnet (6).

Das Motor-Istmoment $\tau_{ist}$ (7) kann aus dem Motor-Iststrom $I_{ist}$ (2) und einen aus der Motorkennlinie abgeleiteten Übertragungsfaktor $C$ (3) berechnet werden. Aus dem Motor-Istmoment kann mit Kenntnis der Masse m über eine Bewegungsgleichung (8) ein Beschleunigungserwartungswert $\ddot{q}_{erw}$ berechnet werden.

Umgekehrt kann durch ein inverses dynamisches Modell der erwartete Motorstrom $I_{erw}$ (11) berechnet werden.

Durch die Integration des Erwartungswertes für die Achs-Beschleunigung $\ddot{q}_{erw}$ wird ein Erwartungswert für die Achs-Geschwindigkeit $\dot{q}_{erw}$ berechnet (9) und daraus durch Integration ein Erwartungswert für die Gelenkstellung $q_{erw}$ berechnet (10).

Aufgrund der unbekannten Integrationskonstanten ist keine Berechnung von absoluten Größen sondern nur einer Tendenz möglich. Durch geeigneten Abgleich der Erwartungswerte (Anfangswerte) mit den aus den Lage-Istwerten berechneten gesicherten Werte können absolute Größen hergestellt werden.

Die Größenlage $q_{ist}$, Geschwindigkeit $\dot{q}_{ist}$ und Beschleunigung $\ddot{q}_{ist}$ beschreiben den physikalischen Ist-Zustand einer Maschinenachse.

Die Größenlage $q_{erw}$, Geschwindigkeit $\dot{q}_{erw}$ und Beschleunigung $\ddot{q}_{erw}$ beschreiben den physikalischen Erwartungszustand einer Maschinenachse.

Da zum einen die Istwerte (1), (5), (6) jeweils zweikanalig gebildet werden, zum anderen zusätzlich als Erwrartungswerte (8), (9), (10) vorliegen ist durch Plausibilitätsprüfung zwischen dem Erwartungszustand und dem Ist-Zustand eine sichere Zustandsüberwachung des Systems möglich.

Aus den Größen (1), (5), (6), (8), (9), (10) kann auf einen plausiblen Achszustand geschlossen werden:

a) In welcher Stellung (Position) befindet sich die Achse?
Der aktuelle Lageistwert $q_{ist}$ zeigt die aktuelle Stellung der Achse an. $q_{ist}$ sollte annähernd $q_{erw}$ entsprechen, sonst liegt ein Fehlzustand vor.

b) Steht die Achse still?
Die Achse steht still, wenn $\dot{q}_{ist} \approx \dot{q}_{erw} \approx 0$ ist, sonst liegt ein Fehlzustand vor.

c) Fährt die Achse mit erwarteter Geschwindigkeit?
$\dot{q}_{ist}$ gibt die aktuelle Geschwindigkeit an.
$\dot{q}_{ist}$ sollte annähernd $\dot{q}_{erw}$ entsprechen, sonst liegt ein Fehlzustand vor.

d) Fährt die Achse mit konstanter Geschwindigkeit?
Die Achse bewegt sich mit konstanter Geschwindigkeit, wenn $\ddot{q}_{ist} \approx \ddot{q}_{erw} \approx 0$ ist, sonst liegt ein Fehlzustand vor.

e) Beschleunigt/verzögert die Achse mit erwarteter Beschleunigung/Verzögerung?

$\dot{q}_{ist}$ gibt die aktuelle Beschleunigung/Verzögerung an.
$\ddot{q}_{ist}$ sollte annähernd $\ddot{q}_{erw}$ entsprechen, sonst liegt ein Fehlzustand vor.

f) Bewegt sich die Achse frei oder ist sie gehemmt? (Zustandsschleppfehler)
Die Achse bewegt sich frei, wenn $I_{ist} \approx I_{erw}$ und $\ddot{q}_{ist} \approx \ddot{q}_{erw}$ und $\dot{q}_{ist} \approx \dot{q}_{erw}$ und $q_{ist} \approx q_{erw}$ ist.
Die Achse ist gehemmt, wenn $|I_{ist}| > |I_{erw}|$ oder $|\ddot{q}_{ist}| < |\ddot{q}_{erw}|$ oder $|\dot{q}_{ist}| < |\dot{q}_{erw}|$ oder $q_{ist} <> q_{erw}$ ist.

g) Bewegt sich die Achse kontrolliert oder unkontrolliert (beschleunigt unkontrolliert)?
Die Achse bewegt sich unkontrolliert, wenn oder $|\ddot{q}_{ist}| > |\ddot{q}_{erw}|$ oder $|\dot{q}_{ist}| > |\dot{q}_{erw}|$ oder $q_{ist} <> q_{erw}$ ist.

Entspricht ein erwarteter Wert nicht dem gemessenen Wert, so muss geprüft werden, ob es sich dabei um einen betriebsmäßigen Zustand oder einen Fehlzustand handelt.

Solch ein Zustand kann auftreten, wenn sich eine Achse nicht bewegen kann da sie z. B. durch eine Bremse oder durch eine Kollision mit einem externen Gegenstand gehemmt ist.

**Patentansprüche**

1. Verfahren zur sicheren Zustandsüberwachung einer Antriebseinheit mit Mehrphasenmotor, wobei zumindest Strom-Istwerte ($I_U$, $I_V$) von zwei Motorphasen mittels Stromgebern (SWA, SWB) gemessen werden und wobei jeder Strom-Istwert ($I_U$, Iv) durch zumindest zwei unabhängige Auswerteeinheiten (AWEA, AWEB) zumindest zweikanalig ausgewertet wird, **dadurch gekennzeichnet,** **dass** aus den zwei gemessenen Strom-Istwerten ($I_{ISTU}$, $I_{ISTV}$) der Motorphasen ein sicherer Strom-Istwert ($I_{SICHER}$) zur sicheren Zustandsüberwachung von von dem Motorstrom abhängigen Zuständen der Antriebseinheit generiert wird, dass in jeder der Auswerteeinheiten (AWEA, AWEB) ein Effektivstrom-Istwert ($I_{RE-SA}$, $I_{RESB}$) berechnet wird, dass die Effektivstrom-Istwerte ($I_{RESA}$, $I_{RESB}$) in einem sicheren Vergleicher (SV) mit einem Strom-Sollwert ($I_{SOLL}$) und/oder miteinander verglichen werden und dass der an einem Ausgang des sicheren Vergleichers (SV) zumindest zweikanalig sicher ermittelte Strom-Istwert ($I_{SICHER}$) mit einem zulässigen Grenzwert verglichen wird.

2. Verfahren nach Anspruch 1,
**dadurch gekennzeichnet,**
**dass** der Strom-Sollwert ($I_{SOLL}$) entweder von einem Servoverstärker oder von einer Maschinensteuerung dem sicheren Vergleicher zugeführt wird.

**3.** Verfahren nach Anspruch 1 oder 2,
**dadurch gekennzeichnet,**
**dass** der sichere Vergleicher (SV) Effektivstrom-Istwerte ($I_{RESA}$, $I_{RESN}$) mehrerer Servoverstärker auswertet.

**4.** Verfahren nach zumindest einem der vorhergehenden Ansprüche,
**dadurch gekennzeichnet,**
**dass** das Ergebnis des Vergleichs in dem als sicheren speicherprogrammierbaren Steuerung (Sicherheits-SPS) ausgebildeten sicheren Vergleicher (SV) als Sicherheitsmerker für die Realisierung von Applikationsfunktionen verwendet wird.

**5.** Verfahren nach zumindest einem der vorhergehenden Ansprüche,
**dadurch gekennzeichnet,**
**dass** der sichere Strom-Istwert ($I_{SICHER}$) zur Prüfung einer der Antriebseinheit zugeordneten Bremseinrichtung verwendet wird.

**6.** Verfahren nach zumindest einem der vorhergehenden Ansprüche,
**dadurch gekennzeichnet,**
**dass** nach Öffnen der Bremseinrichtung ein aktueller Haltestrom, der einem Haltemoment des Motors in einer Prüfstellung entspricht, gemessen wird, dass anschließend die Bremseinrichtung geschlossen wird, dass der Motor bei geschlossener Bremse mit einem Prüfstrom beaufschlagt wird und dass der Motor während der Prüfphase auf Stillstand überwacht wird.

**7.** Schaltungsanordnung zur sichereren Zustandsüberwachung einer Antriebseinheit mit Mehrphasenmotor, umfassend einen ersten und einen zweiten Stromgeber (SWA, SWB) zur Messung jeweils eines Strom-Istwertes ($I_{U\ IST}$, $I_{V\ IST}$) von zwei Motorphasen sowie zwei unabhängige Auswerteeinheiten (AWEA, AWEB) mit jeweils einem ersten und einem zweiten Eingang, wobei ein Ausgang des ersten Stromgebers (SWA) mit jeweils einem ersten Eingang der Auswerteeinheiten und ein Ausgang des zweiten Stromgebers (SWB) mit jeweils einem zweiten Eingang der Auswerteeinheiten (AWEA, AWEB) verbunden ist,
**dadurch gekennzeichnet,**
**dass** die Auswerteeinheiten (AWEA, AWEB) jeweils einen A/D-Wandler (AD-WA, ADWB) sowie einen Mikrocontroller (MCA, MCB) aufweisen, dass jeweils ein Ausgang der Auswerteeinheiten (AWEA, AWEB) zur Zufuhrung eines aus den zwei Strom-Istwerten ($I_{U\ IST}$, $I_{V\ LST}$) der Motorphasen berechneten Effektivstrom-Istwerts ($I_{RESA}$, $I_{RESB}$) mit jeweils einem Eingang eines sicheren Vergleichers (SV) verbunden ist, wobei in dem Vergleicher (SV) die in den Auswerteeinheiten (AWEA, AWEB) jeweils berechneten Effektivstrom-Istwerte ($I_{RESA}$, $I_{RESB}$) miteinander und/oder mit einem Strom-Sollwert ($I_{SOLL}$) vergleichbar sind und dass der sichere Vergleicher (SV) einen Ausgang aufweist, an dem ein zumindest zweikanalig sicher ermittelter Strom-Istwert ($I_{SICHER}$) zum Vergleich mit einem zulässigen Grenzwert zur Verfügung steht.

**8.** Schaltungsanordnung nach Anspruch 7,
**dadurch gekennzeichnet,**
**dass** die Stromgeber (SWA, SWB) als Stromwandler wie LEM-Module ausgebildet sind.

**9.** Schaltungsanordnung nach zumindest der Ansprüche 7 bis 8,
**dadurch gekennzeichnet,**
**dass** die Stromgeber (SWA, SWB), die A/D-Wandler (ADWA, ADWB) sowie die Mikrocontroller (MCA, MCB) Bestandteil eines Servoverstärkers (SERVOV) sind.

**10.** Schaltungsanordnung nach zumindest einem der Ansprüche 7 bis 9,
**dadurch gekennzeichnet,**
**dass** der sichere Vergleicher (SV) als Sicherheits-SPS ausgebildet ist.

**Claims**

**1.** Method for reliable status monitoring of a drive unit with multi-phase motor, where at least actual current values ($I_U$, $I_V$) of two motor phases are measured using current sensors (SWA, SWB) and where each actual current value ($I_U$, $I_V$) is evaluated by at least two independent evaluation units (AWEA, AWEB) in at least two channels,
**wherein**
from the two measured actual current values ($I_{ISTU}$, $I_{ISTY}$) of the motor phases a reliable actual current value ($I_{SICHER}$) for reliable status monitoring is generated by statuses of the drive unit dependent on the motor current, wherein in each of the evaluation units (AWEA, AWEB) an effective actual current value ($I_{RESA}$, $I_{RESB}$) is calculated, wherein the effective actual current values ($I_{RESA}$, $I_{RESB}$) are compared in a reliable comparator (SV) with a current set value ($I_{SOLL}$) and/or with one another and wherein the actual current value ($I_{SICHER}$) reliably ascertained in at least two channels is compared with a permissible limit value at an output of the reliable comparator.

**2.** Method according to Claim 1,
**wherein**
the current set value ($I_{SOLL}$) is fed to the reliable comparator either by a servo-amplifier or by a machine control system.

**3.** Method according to Claim 1 or 2,
**wherein**
the reliable comparator (SV) evaluates effective actual current values ($I_{RESA}$, $I_{RESN}$) of several servo-amplifiers.

**4.** Method according to at least one of the preceding claims,
**wherein**
the result of the comparison in the reliable comparator (SV) designed as a reliable programmable logic control (safety PLC) is used as a safety flag for the implementation of application functions.

**5.** Method according to at least one of the preceding claims,
**wherein**
the reliable actual current value ($I_{SICHER}$) is used for testing of a braking device assigned to the drive unit.

**6.** Method according to at least one of the preceding claims,
**wherein**
after opening of the braking device a present holding current corresponding to a holding torque of the motor in a test position is measured, wherein the braking device is then closed, wherein the motor is subjected to a test current with the brake closed and wherein the motor is monitored for standstill during the test phase.

**7.** Circuit arrangement for reliable status monitoring of a drive unit with multi-phase motor, comprising a first and a second current sensor (SWA, SWB) each for measuring one actual current value ($I_{U\ IST}$, $I_{V\ IST}$) of two motor phases and two independent evaluation units (AWEA, AWEB) each with a first and a second input, where one input of the first current sensor (SWA) is connected to a first input of the evaluation units and one output of the second current sensor (SWB) to a second input of the evaluation units (AWEA, AWEB),
**wherein**
the evaluation units (AWEA, AWEB) each have an A/D converter (ADWA, ADWB) and a microcontroller (MCA, MCB), wherein one output each of the evaluation units (AWEA, AWEB) is connected to one input each of a reliable comparator (SV) for supplying an effective actual current value ($I_{RESA}$, $I_{RESB}$) calculated from the two actual current values ($I_{U\ IST}$, $Iv\ _{IST}$) of the motor phases, where in the comparator (SV) the effective actual current values ($I_{RESA}$, $I_{RESB}$) each calculated in the evaluation units (AWEA, AWEB) are comparable with one another and/or with a current set value ($I_{SOLL}$), and wherein the reliable comparator (SV) has an output at which an actual current value ($I_{SICHER}$) reliably ascertained in at least two channels is available for comparison with a permissible limit value.

**8.** Circuit arrangement according to Claim 7,
**wherein**
the current sensors (SWA, SWB) are designed as current converters such as LEM modules.

**9.** Circuit arrangement according to at least one of Claims 7 to 8,
**wherein**
the current sensors (SWA, SWB), the A/D converters (ADWA, ADWB) and the microcontrollers (MCA, MCB) are part of a servo-amplifier (SERVOV).

**10.** Circuit arrangement according to at least one of Claims 7 to 9,
**wherein**
the reliable comparator (SV) is designed as a safety PLC.

**Revendications**

**1.** Procédé pour la surveillance fiable de l'état d'une unité d'entraînement avec moteur polyphasé, dans lequel au moins des valeurs réelles de courant ($I_U$, $I_V$) de deux phases de moteur sont mesurées par des capteurs de courant (SWA, SWB) et chaque valeur réelle de courant ($I_U$, $I_V$) est analysée au moins sur deux voies par au moins deux unités d'évaluation (AWEA, AWEB) indépendantes,
**caractérisé en ce**
**qu'**à partir des deux valeurs réelles de courant ($I_{ISTU}$, $I_{ISTV}$) mesurées des phases de moteur est générée une valeur réelle fiable de courant ($I_{SICHER}$) pour une surveillance fiable des états de l'unité d'entraînement qui dépendent du courant du moteur, que dans chaque unité d'évaluation (AWEA, AWEB) est calculée une valeur réelle de courant effectif ($I_{RESA}$, $I_{RESB}$), que les valeurs réelles de courant effectif ($I_{RESA}$, $I_{RESB}$) sont comparées à une valeur théorique de courant ($I_{SOLL}$) et/ou entre elles dans un comparateur fiable (SV), et que sur une sortie du comparateur fiable (SV), une valeur réelle de courant ($I_{SICHER}$) fiablement déterminée au moins sur deux voies est comparée à une valeur limite admissible.

**2.** Procédé selon la revendication 1,
**caractérisé en ce**
**que** la valeur théorique de courant ($I_{SOLL}$) est fournie au comparateur fiable par un servo-amplificateur ou par une commande de machine.

**3.** Procédé selon la revendication 1 ou 2,
**caractérisé en ce**
**que** le comparateur fiable (SV) analyse les valeurs réelles de courant effectif ($I_{RESA}$, $I_{RESN}$) de plusieurs servo-amplificateurs.

**4.** Procédé selon au moins l'une des revendications précédentes,
**caractérisé en ce**
**que** le résultat de la comparaison dans le comparateur fiable (SV) conçu comme commande programmable fiable (CP de sécurité) est utilisé comme indicateur de sécurité pour la réalisation de fonctions d'application.

**5.** Procédé selon au moins l'une des revendications précédentes,
**caractérisé en ce**
**que** la valeur réelle fiable de courant ($I_{SICHER}$) est utilisée pour contrôler un dispositif de freinage associé à l'unité d'entraînement.

**6.** Procédé selon au moins l'une des revendications précédentes,
**caractérisé en ce**
**qu'**après ouverture du dispositif de freinage est mesuré un courant d'arrêt momentané correspondant à un couple de blocage du moteur dans une position de contrôle, que le dispositif de freinage est ensuite fermé, que le moteur est alimenté avec un courant d'essai quand le frein est fermé, et que l'arrêt du moteur est surveillé pendant la phase de contrôle.

**7.** Arrangement de circuits pour la surveillance fiable de l'état d'une unité d'entraînement avec moteur polyphasé, comprenant un premier et un second capteurs de courant (SWA, SWB) destinés à mesurer respectivement une valeur réelle de courant ($I_{U\ IST}$, $I_{V\ IST}$) de deux phases de moteur, ainsi que deux unités d'évaluation indépendantes (AWEA, AWEB) avec respectivement une première et une seconde entrées, sachant qu'une sortie du premier capteur de courant (SWA) est reliée à respectivement une première entrée des unités d'évaluation et qu'une sortie du second capteur de courant (SWB) est reliée à respectivement une seconde entrée des unités d'évaluation (AWEA, AWEB),
**caractérisé en ce**
**que** les unités d'évaluation (AWEA, AWEB) présentent chacune un convertisseur A/N (ADWA, ADWB) ainsi qu'un microcontrôleur (MCA, MCB), que respectivement une sortie des unités d'évaluation (AWEA, AWEB) est reliée à respectivement une entrée d'un comparateur fiable (SV) pour fournir une valeur réelle de courant effectif ($I_{RESA}$, $I_{RESB}$) calculée à partir des deux valeurs réelles de courant ($I_{U\ IST}$, $I_{V\ IST}$) des phases du moteur, sachant que dans le comparateur (SV), les valeurs réelles de courant effectif ($I_{RESA}$, $I_{RESB}$) respectivement calculées dans les unités d'évaluation (AWEA, AWEB) sont comparables entre elles et/ou avec une valeur théorique de courant ($I_{SOLL}$), et que le comparateur fiable (SV) présente une sortie, sur laquelle est mise à disposition une valeur réelle de courant ($I_{SICHER}$) fiablement déterminée au moins sur deux voies pour comparaison avec une valeur limite admissible.

**8.** Arrangement de circuits selon la revendication 7,
**caractérisé en ce**
**que** les capteurs de courant (SWA, SWB) sont conçus comme transformateurs d'intensité tels que des modules LEM.

**9.** Arrangement de circuits selon au moins les revendications 7 à 8,
**caractérisé en ce**
**que** les capteurs de courant (SWA, SWB), les convertisseurs A/N (ADWA, ADWB) ainsi que les microcontrôleurs (MCA, MCB) sont des éléments constitutifs d'un servo-amplificateur (SERVOV).

**10.** Arrangement de circuits selon au moins l'une des revendications 7 à 9,
**caractérisé en ce**
**que** le comparateur fiable (SV) est conçu comme CP de sécurité.

Fig. 1

EP 1 750 188 B1

MST
Steuerung

**16**
Übertragung der achsspezifischen Stromgrenzwerte, zulässigen Positionsabweichung, Prüfintervall und der zu überwachenden Achsen (bitcodiert)

**12**
Intervallkontrolle und Tigger für Bremsentest in Zeitabständen <=8h

**32**
Aufgabe Warnhinweis am Bedienterminal

SERVOV
Servoverstärker

**10**
Einleitung Bremsentest

**22**
Bremse öffnen und Haltemotorstrom $I_S$ messen
Flag1 $(+I_S)$···

**26**
Bremse schließen
Flag2···

**28**
Bremse belasten (z.B. 1sec.) mit Testmotorstrom $I_T$ (*) 2-kanaliger Vergleich der Strom-Ist- und Sollwerte
Flag3 $(+I_T)$···

**30**
Test mit Warnparametern durchgeführt?
nein

nein

Warte auf Benutzereingabe zum erneuten BT

14
Einleitung BT mit Warnparametern
ja Einleitung BT mit Fehlerparametern

ja

(*)
Ermittlung des Testmotorstromes für den Bremsentest:
Maximales zu testendes Belastungsmoment der Haltebremse $M_B$ entspricht einem Motorstrom $I_B$

Die Schwerkraft belastet die Haltebremse bereits mit $M_S$, was dem Haltestrom $I_S$ entspricht.

Somit muß die Bremse noch mit dem verbleibenden Moment $M_T = M_B - M_S$ in Richtung der Schwerkraft belastet werden, was dem Motorstrom $I_T$ entspricht.

# Fig. 2

Sicherer Vergleicher/
Sicherheits-SPS

SV

18

Flag1

Überwachung des
Bremsentests

durch

Kontrolle der Zustände
(und Stromistwerte)
+
Stillstandsüberwachung
mit vorgegebenem
Grenzwert

24

Zeitüberwachung

Test innerhalb 8h?
Sicherheitsmerker
für SPS

Flag2

Flag3

ja: Zeitzähler Reset

nein

Bremsentest
erfolgreich?

nein

Ausnahmebetrieb
z.B. nur noch
Automatikbetrieb mit
Schutztürzuhaltung oder
Zeitbegrenzung 2-5min
für Wartung und neuen
Bremsentest

20

Zeitzähler
abgelaufen

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10163010 A
- EP 1239354 B

- US 5206572 A